# EUROPEAN PATENT APPLICATION

(11) **EP 4 782 946 A1**
(43) Date of publication of application: **29.07.2026**
(21) Application number: 26152263.5
(22) Date of filing: 16.01.2026
(51) Int. Cl.: G05B 23/02

(54) **FAULT IDENTIFICATION METHOD AND APPARATUS**

(30) Priority: 23.01.2025 US 202519034823
(71) Applicant: General Electric Company, Cincinnati, Ohio 45215 (US)
(72) Inventor: MIRÓN BERNAL, Miguel Angel, 76146 Querétaro (MX); WISEMAN, Matthew William, Schenectady, 12345 (US); KHALID, Inenhe Mohammed, West Chester, 45069 (US)
(74) Representative: Openshaw & Co.

(57) **Abstract**

A control circuit (105, 106) accesses (201) first time-dispersed output (202) from a first circuit (101, 103) and identifies a potential fault for that first circuit as a function, at least in part, of circuit output intermittency. These teachings will accommodate a variety of such circuits including, for example, a sensor (103) (such as an aircraft-mounted jet turbine engine sensor) as well as non-sensor circuits (101) (such as a full authority digital engine control).

## Description

### Technical Field

These teachings relate generally to fault identification.

### Background

Various electric circuits, including various control circuits and sensors, provide data on an intermittent basis. That data may be provided on a real-time (or near real-time) basis or on a delayed basis. A total failure of such a circuit is sometimes identified by noting the complete absence of such data.

### Brief Description of the Drawings

Various needs are at least partially met through provision of the fault identification method and apparatus described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a block diagram as configured in accordance with various embodiments of these teachings;
FIG. 2 comprises a flow diagram as configured in accordance with various embodiments of these teachings;
FIG. 3 comprises a flow diagram as configured in accordance with various embodiments of these teachings;
FIG. 4 comprises a block diagram as configured in accordance with various embodiments of these teachings;
FIG. 5 comprises a graph as configured in accordance with various embodiments of these teachings;
FIG. 6 comprises a graph as configured in accordance with various embodiments of these teachings;
FIG. 7 comprises an illustrative example cluster graph as configured in accordance with various embodiments of these teachings;
FIG. 8 comprises a block diagram as configured in accordance with various embodiments of these teachings; and
FIG. 9 comprises a graph as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### Detailed Description

It can be difficult in some application settings to determine that a particular circuit has failed when that circuit only provides data on an intermittent basis. Intermittency refers to data that is not provided or generated/sourced on a continuous basis (although the data may, or may not, be sensed on a continuous basis by a corresponding sensor) but instead is only sourced on a sporadic basis. That sporadic basis may be regular or it may be irregular.

It can be even more difficult to identify such a circuit as only beginning to fail (as versus having actually failed). While such concerns can be troublesome in a variety of contexts, these can be especially significant challenges in the context of aviation application settings. Modern aircraft often include and depend upon one or more networks having sensors, actuators, and control systems that all depend upon one another working properly to ensure efficiency as well as safety. When a network element includes a circuit that only ordinarily provides data on an intermittent basis, other network components may operate using faulty and/or only-partial information from such a network element that has, in fact, failed (or is failing). Engine or other aircraft sensors can present degraded operation over the life of the sensor or can rapidly deteriorate without prior indication. Once inappropriate sensor intermittent behavior is occurring, and when that phenomena is combined in context with other signals from other components, failures of monitored equipment can be difficult to detect and accommodate, especially when the intermittency is detected as a valid signal but shifting within acceptable operational range.

Generally speaking, the various aspects of the present disclosure can be employed with a control circuit that accesses first time-dispersed output from a first circuit and identifies a potential fault for that first circuit as a function, at least in part, of circuit output intermittency. These teachings will accommodate a variety of such circuits including, for example, a sensor (such as an aircraft-mounted jet turbine engine sensor) as well as non-sensor circuits (such as circuitry in a full authority digital engine control).

These teachings will also accommodate application settings that include a plurality of such circuits. For example, the control circuit may access first time-dispersed output from each of a plurality of circuits, and then identify a potential fault for each and any of at least some of the plurality of circuits as a function, at least in part, of circuit output intermittency.

By one approach, the aforementioned control circuit can be configured to identify a potential sensor fault for the first circuit by identifying a potential sensor fault for the first circuit as a function of only sensor data intermittency (and therefore without the benefit of other data, signals, or input from the first circuit itself or other network elements or sensors).

By one approach, the control circuit identifies a potential sensor fault for the first circuit as a function, at least in part, of circuit data intermittency by differentiating between a first range of intermittency and a second range of intermittency.

By one approach, the control circuit identifies a potential sensor fault for the first circuit as a function, at least in part, of circuit data intermittency by identifying a potential circuit fault for the first circuit as a function, at least in part, of a rate of change of circuit data intermittency.

By one approach, these teachings will accommodate identifying a potential circuit fault for the first circuit as a function, at least in part, of circuit data intermittency by training a machine learning model using historical circuit data to provide a trained machine learning model and then identifying and grouping circuit intermittency patterns using the trained machine learning model. A potential circuit fault may then be identified as a function of the aforementioned circuit intermittency patterns.

These teachings can be beneficially applied in a variety of operating settings. By one approach, the intermittent data comprises some substantive output that represents core functionality of the circuit. By another approach, where the circuit itself performs a periodic self-health check and the output of that health check intermittently indicates both a healthy state and an unhealthy state, these teachings can help to identify such a situation.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

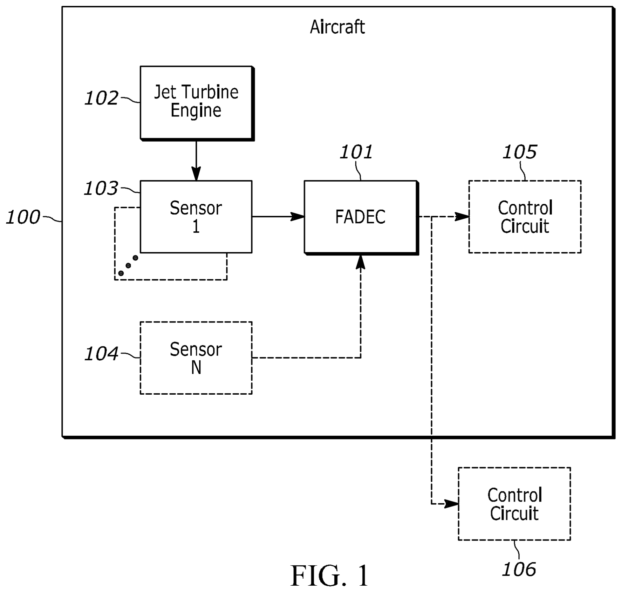

The foregoing and other benefits may become clearer upon making a thorough review and study of the following detailed description. Referring now to the drawings, and in particular to FIG. 1, an illustrative apparatus 100 that is compatible with many of these teachings will now be presented. It will be understood that many of the details of this illustrative apparatus 100 are intended to serve an illustrative purpose and are not intended to suggest any particular limitations with respect to these teachings.

For the sake of an illustrative purpose, the apparatus 100 in this example is an aircraft, and in particular an aircraft having at least one jet turbine engine 102. The apparatus 100 also has at least a first circuit comprising, in the present example, a full authority digital engine control (FADEC) 101. A FADEC is a system comprising a digital computer (often referred to as an "electronic engine controller" (EEC) or "engine control unit" (ECU)) and its related accessories that control aspects of aircraft engine performance. In this example, the aircraft also includes at least one sensor 103 such as, for the sake of an illustrative example, a jet turbine engine sensor. In such a case there may be multiple jet turbine engine sensors. These teachings will also accommodate application settings where there is one or more other sensors 104 (in lieu of a jet turbine engine sensor or in combination therewith). In this example, this sensor(s) 103, 104 are operably coupled to the aforementioned FADEC 101. Depending on the application setting, the FADEC 101 may also couple to an onboard control circuit 105 and/or a remote control circuit 106 that is not physically mounted on the aircraft, either temporarily or permanently, but is instead disposed at, for example, a ground facility for the manufacturer of the aircraft, an airline that operates the aircraft, or a service provider that provides maintenance and repair services to the operator of the aircraft.

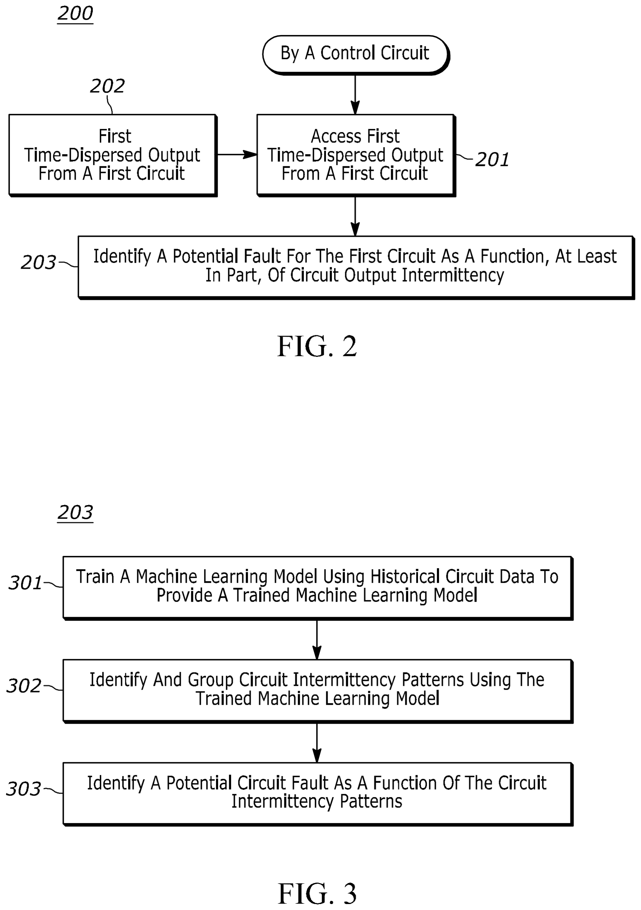

Referring now to FIG. 2, a process 200 that can be carried out, for example, in conjunction with the above-described application setting will be described. In particular, a control circuit may carry out this process 200. With reference also to FIG. 1, that control circuit may be integral to the FADEC 101, may be the onboard control circuit 105, or may be the remote control circuit 106. It will also be understood that the "control circuit" that carries out this process 200 may be carried out by two or more of the aforementioned control circuits working in combination with one another. Generally speaking, this process 200 serves to facilitate identifying a potential circuit fault with, for example, the aforementioned first circuit (in this example, the FADEC 101 or one or more of the described sensors 103, 104).

At block 201, the aforementioned control circuit accesses first time-dispersed output 202 from a first circuit (such as the aforementioned FADEC 101 and/or sensor(s) 103, 104). As used herein, the expression "time-dispersed" shall be understood to mean that the data is not continuously provided over time, but instead is provided, in normal and ordinary course, with lapses of time that separate various offerings of data. Accordingly, the data is provided intermittently in normal and ordinary course. That intermittency may be regular and periodic and/or may be sporadic, at least to some extent.

The accessed first time-dispersed output 202 will typically cover a period of time that includes both a number of discrete outputs from the first circuit as well as the intervening periods of time when no such output is being provided by the first circuit. By way of example, in the case where the apparatus 100 comprises an aircraft, and where the first circuit comprises a jet turbine engine sensor 103, the accessed first time-dispersed output 202 may represent output from that jet turbine engine sensor 103 over some predetermined block of time (such as one hour) or during an entire flight of the aircraft (these being just two illustrative examples in these regards).

This process 200 will readily accommodate accessing time-dispersed output from other circuits as well. For example, block 201 can further include accessing at least second time-dispersed output from at least a second circuit (such as, for example, second time-dispersed output from at least a second sensor). There is no particular limit to the number of circuits that can be monitored as described herein.

At block 203, the control circuit can then identify a potential fault for the first circuit (as well as any number of other circuits when corresponding time-dispersed output for such circuits has been received as described above) as a function, at least in part, of circuit output intermittency.

To be clear, this identification can serve to identify potential faults (including both future impending faults as well as current faulty operation). In particular, while an existing fault may be readily detected by other approaches that monitor for a complete absence of expected data, this process 200 may identify a potential fault notwithstanding the reception of data that might otherwise be mistaken for output from a properly functioning circuit. This identification can be based, for example, upon determining that observed data intermittency is abnormal.

These teachings will accommodate various approaches to such identification. FIG. 3 presents one illustrative approach in these regards.

Block 301 provides for training a machine learning model using historical sensor data to provide a trained machine learning model. Those skilled in the art understand that machine learning comprises a branch of artificial intelligence. Machine learning typically employs learning algorithms such as Bayesian networks, decision trees, nearest-neighbor approaches, and so forth, and the process may operate in a supervised or unsupervised manner as desired. Deep learning (also sometimes referred to as hierarchical learning, deep neural learning, or deep structured learning) is a subset of machine learning that employs networks capable of learning (typically supervised, in which the data consists of pairs (such as input_data and labels) and the aim is to learn a mapping between the input_data and the associated labels) from data that may at least initially be unstructured and/or unlabeled. Deep learning architectures include deep neural networks, deep belief networks, recurrent neural networks, and convolutional neural networks. Many machine learning algorithms build a so-called "model" based on sample data, known as training data or a training corpus, in order to make predictions or decisions without being explicitly programmed to do so.

Block 302 then provides for identifying and grouping circuit intermittency patterns using the trained machine learning model followed, at block 303, by identifying a potential circuit fault as a function of the circuit intermittency patterns.

These teachings will accommodate various approaches to the aforementioned grouping activity. By one approach, for example, a K-means clustering technique can be employed. K-means clustering is an unsupervised machine learning algorithm that partitions a given dataset into a specified number of clusters, denoted as "k," which is determined a priori. The core idea is to identify k centroids, one for each cluster, such that each point in the dataset is assigned to a nearest centroid, simultaneously minimizing within-cluster variances while maximizing the distance between centroids. The process can begin with an initial set of randomly selected centroids, after which an iterative refinement technique can be employed. So configured, points are assigned to the nearest centroid based on some distance metric (such as a Euclidean distance), then the centroids are recalculated as the mean of the points are assigned to them. This assignment and update cycle can continue until the centroids stabilize and the positions no longer change significantly (or, if desired, until a predetermined number of iterations is reached). This results in a partitioning of the data space into so-called Voronoi cells.

Commercial aircraft engines sensors can have multiple failure modes that can lead to abnormal intermittent input to an engine FADEC system. This, in turn, can potentially lead to significant events when there are additional failures already existing on the engine. The present teachings can provide for early identification of abnormal sensor intermittent behavior by, at least in part, leveraging frequent changes of state in health status and/or the durations associated with such states. Condensing the amount of the duration of each state into an n-dimensional space and by applying machine learning techniques for grouping datasets, these teachings can lead to the identification and grouping of multiple patterns of intermittency from single or multiple engine sensors and/or FADEC components with FADEC onboard monitoring (and/or remote, off-board monitoring.

These teachings have the capability to provide indications of intermittent behavior on a single or multiple aircraft engine sensors or FADEC internal components, which in turn can lead to early removal of sensors when convenient even before such components are mandated to be removed by a FADEC system. These teachings can also be implemented within FADEC application software to identify common multiple failures to FADEC internal components that otherwise may remain unnoticed and which may inappropriately cause the removal of external components/inputs as versus replacing the responsible FADEC component.

Further details that comport with these teachings will now be presented. It will be understood that the specific details of these examples are intended to serve an illustrative purpose and are not intended to suggest any particular limitations with respect to these teachings. These particular examples are presented in the context of an aviation application setting. It will again be understood, however, that these teachings are more broadly applicable and that the aviation application setting is intended to serve only as a convenient example.

These teachings can use a rate of change of sensor (or other circuit) health status to create an n-dimensional space for clustering data points in a partial flight, a single flight, or over multiple flights as desired. Using historical data over a multi-dimensional space, these teachings can serve to detect and differentiate between acceptable and unacceptable levels of intermittency. The latter, in fact, can serve as a basis for early identification of heavy (e.g., more concerning) sensor/circuit intermittent behavior.

In the case of many circuits, these teachings can enable the detection of internal circuitry component failures. When, for example, multiple failures are clustered due to a single chipset component failure such as solder joint failures, internal chipset ball array manufacturing defects, and so forth, these teachings can at least help to improve the ability for accurate fault isolation.

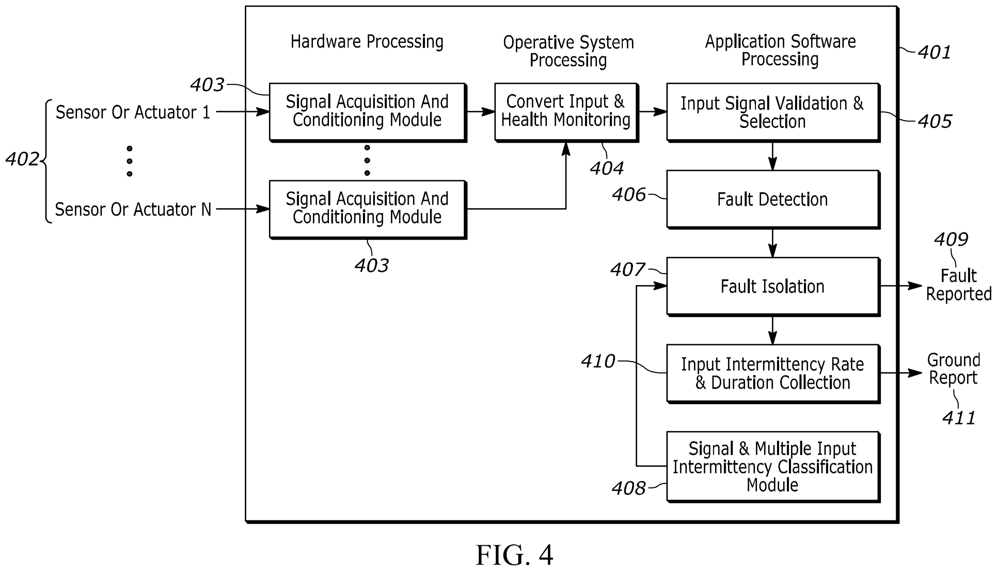

FIG. 4 presents an illustrative example for a digital engine controller 401. In this example, a plurality of sensors (or actuators) 402 provide their respective outputs to corresponding signal acquisition and conditioning modules 403. That hardware processing can be configured as desired to meet the needs of a given application setting. The outputs of those modules 403 are input to a converted input and health monitoring module 404. The converted input and health monitoring module 404, in turn, provides its output to a series modules comprising an input signal validation and selection module 405, a fault detection module 406, and a fault isolation module 407. By one approach, the foregoing modules 403 through 407 can be practiced in accordance with existing approaches if desired.

As denoted by reference numeral 408, however, this illustrative example also includes a single (or multiple) input intermittency classification module. This module 408 carries out the teachings set forth herein to provide information that classifies intermittency information for corresponding sensors 402 with respect to the normalcy or abnormality of that intermittency. That intermittency information, in turn, can be utilized by the aforementioned fault isolation module 407 to facilitate detecting not only a current fault, but also a predicted fault.

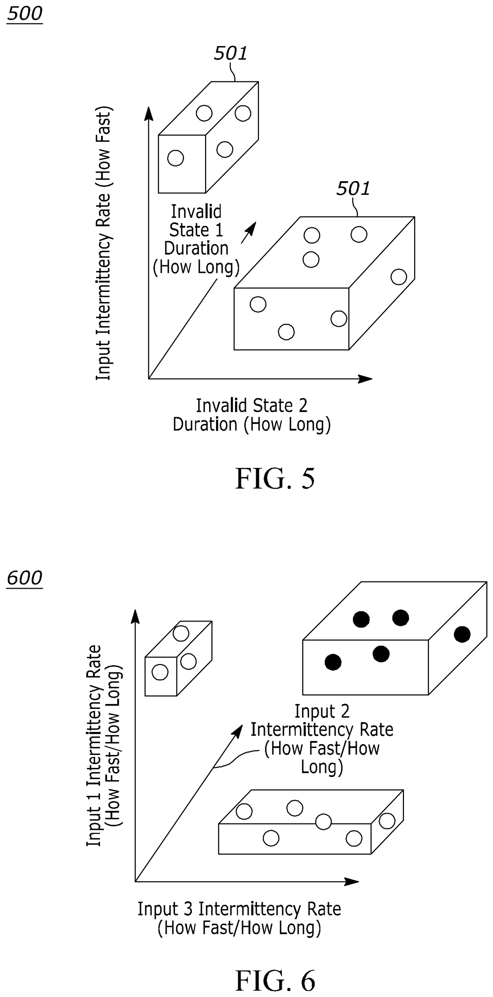

FIG. 5 provides an illustrative example 500 in the case of single sensor input processing. This example 500 presents a three-dimensional representation of an intermittency monitor with two invalid states. In these regards, a sensor may have unique health monitors depending on the intermittency impact over the conditioned signal. For example, a sensor signal may be drifting high or low outside of the normal (or permitted) operating range, in which case there could be two sensor health monitors (corresponding to two health monitoring states), with each monitor indicating an amount of time that the intermittency occurred outside of the operating range (high or low).

The Y-axis corresponds to the intermittency rate for a particular sensor. The Z-axis corresponds to a first invalid state and, in particular, indicates the duration during which that states persists. The X-axis corresponds to a second invalid state and, in particular, indicates the duration during which that state persists. The boxes 501 represent identified clusters that, in turn, can correspond to particular actual/pending fault states.

FIG. 5 illustrates that the X and Z axes indicate the amount of time that elapsed on each health monitoring state. For example, the X axis could represent the amount of time the signal is shifting high and outside of the operating range, while the Z axis could represent the amount of time that the signal is shifting low and outside of the operating range. The Y axis represents the number of transitions between states (for example, how many times during an event the health monitors change from one state (such as low) to another state (such as high). In a given application setting there can be a plurality of health monitor states for a single sensor conditioning, and for the sake of clarity, not all of these potential health monitor states are represented in FIG. 5. It may also not be necessary to train a model using such states in a given application setting.

FIG. 6 provides an illustrative example 600 in the case of multi-input sensor input processing. In particular, this example 600 presents a 3D representation of an intermittency monitor with three input monitors. The Y-axis corresponds to an intermittency rate (input 1) as regards both the rapidity and the duration of monitored intermittency. The Z-axis corresponds to an intermittency rate (input 2) as regards both the rapidity and the duration of monitored intermittency. And somewhat similarly, the X-axis corresponds to an intermittency rate (input 3) as regards both the rapidity and the duration of monitored intermittency.

FIG. 6 corresponds to an application setting that includes additional scenarios that result in identifying failures such as a solder joint issue in a microchip, which issue is impacting multiple sensors. In such a case, FIG. 6 illustrates the health monitor intermittent behavior using multiple components intermittency rates (corresponding to duration and/or change rate). The upper right corner box serves to identify when a new type of intermittency or pattern is found, for example, by a machine learning model. Being new, this intermittency/pattern was not previously classified or labeled by a subject matter expert. In such a case, and by one approach, this new cluster of data could be assigned a particular meaning by a subject matter expert to translate the data into a particular associated hardware failure. That assigned meaning could then be loaded into the classification module 408 so other engines could isolate this new cluster or pattern and perform a better fault isolation.

Referring again to FIG. 4, such information can be appropriately reported as denoted by reference numeral 409. These teachings will accommodate employing any of a wide variety of reporting modalities to accomplish such fault reporting. As one example, the fault report can comprise illuminating a dedicated trouble light in the cockpit of the aircraft. As another example, the fault report can comprise presenting textual and/or graphic content on a display in the aircraft cockpit (or elsewhere in the aircraft) to indicate the fault (and also, if desired, to provide additional information regarding the fault, such as a corresponding severity and/or urgency requirement and/or information regarding immediate actions that can be taken to correct or to at least mitigate any negative circumstances that might attend the existence of the fault). These teachings will also accommodate, in lieu of the foregoing or in combination therewith, transmitting such a fault report to an off-board receiver in order to alert, for example, the operator of the aircraft (such as the corresponding airline or leasing company) to thereby permit, for example, the operator to schedule maintenance (including making one or more repair parts available) for the aircraft to correct the problem at a next stop for the aircraft.

In this illustrative example, the fault isolation module 407 can also provide fault detection information to an input intermittency rate and duration collection module 410. That information regarding intermittency rates and durations (collected on a per-sensor basis) can be reported as desired (as denoted by reference numeral 411). Such information can be provided, directly or indirectly, to any of a variety of ground stations, including facilities operated by the manufacturer of the aircraft, the operator of the aircraft, or a service provider utilized by the operator to maintain and service the aircraft. Such information may be used, for example, as input to a more complex or thorough analysis system that may be able to detect more subtle indications of, for example, pending failures. Such information can also serve as additional training content for the intermittency classification module 408 if desired.

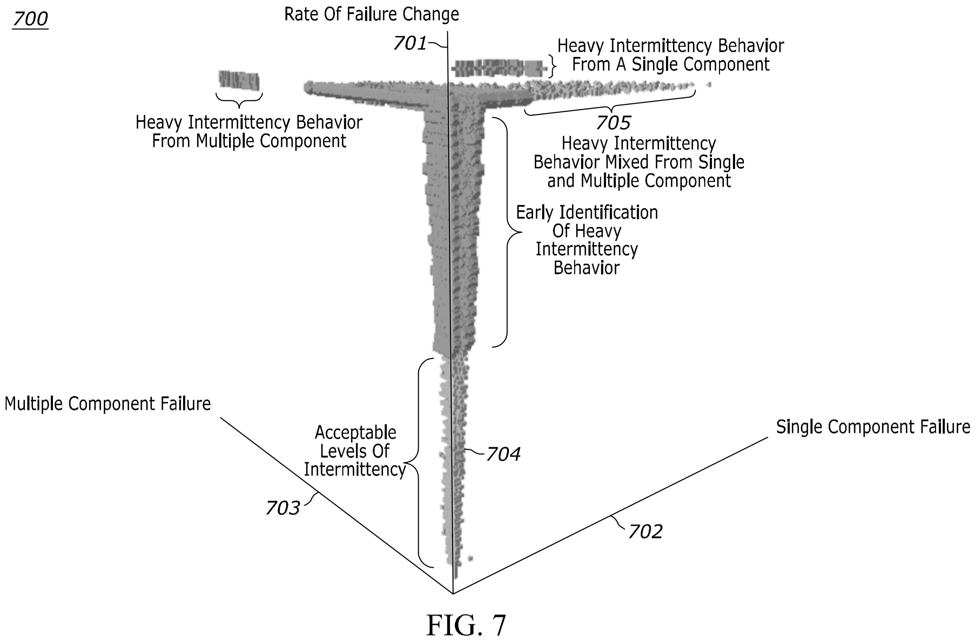

FIG. 7 presents an example of an illustrative cluster graph 700 where data corresponding to particular intermittency behaviors and corresponding failure status is clustered per these teachings. The vertical axis 701 corresponds to change with respect to a rate of failure, the right side axis 702 corresponds to single component failures, and the left side axis 703 corresponds to multiple component failures. Clusters 704 at the lower end of the vertical axis 701 correspond to acceptable levels of intermittency, while heavier (and possibly "early") intermittency behavior for single components and multiple components appear as labeled. The cluster denoted by reference number 705, for example, corresponds to heavy intermittency behavior from both single and multiple components.

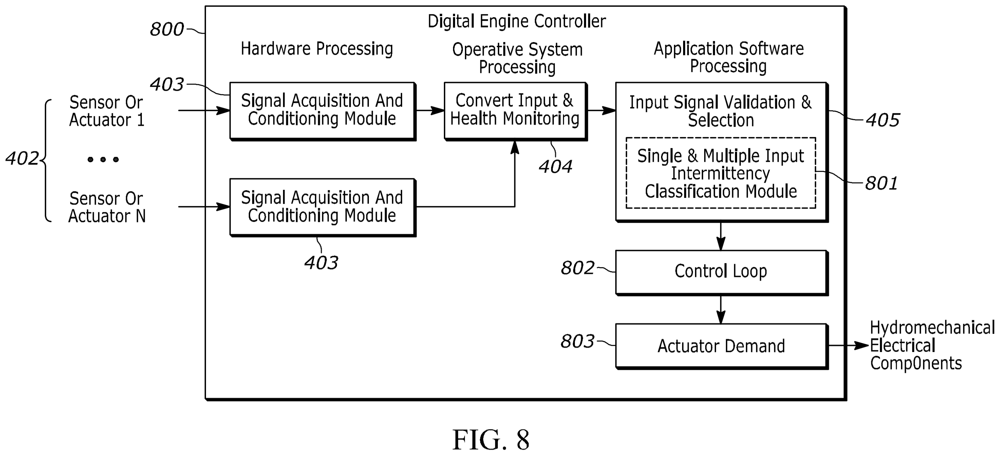

As previously noted, these teachings are highly flexible in practice. As yet another illustrative example in these regards, FIG. 8 presents an approach where these teachings are implemented within and leveraged by an aircraft digital engine controller 800. Many of the components in this figure can be the same as were described above with respect to FIG. 4, and the single and multiple input intermittency classification module 801 (as comprises a part of the input signal validation and selection feature 405) can, in particular, correspond to the description provided above with respect to FIG. 5 and 6.

In this example, the output of the input signal validation and selection feature 405 operably couples to a control loop 802 that, presuming the incoming sensor/actuator signals are classified as trustworthy, provides appropriate control signals to one or more actuator demand circuits 803 that cause the instructed behaviors at various hydromechanical and/or electrical components in the aircraft. Detection of engine sensor intermittency in digital engine controller sensor inputs 402 and/or digital engine controller internal circuitry using a rate of change of sensor health status and time can provide a mechanism for fault detection of intermittent engine sensors in real time engine controllers.

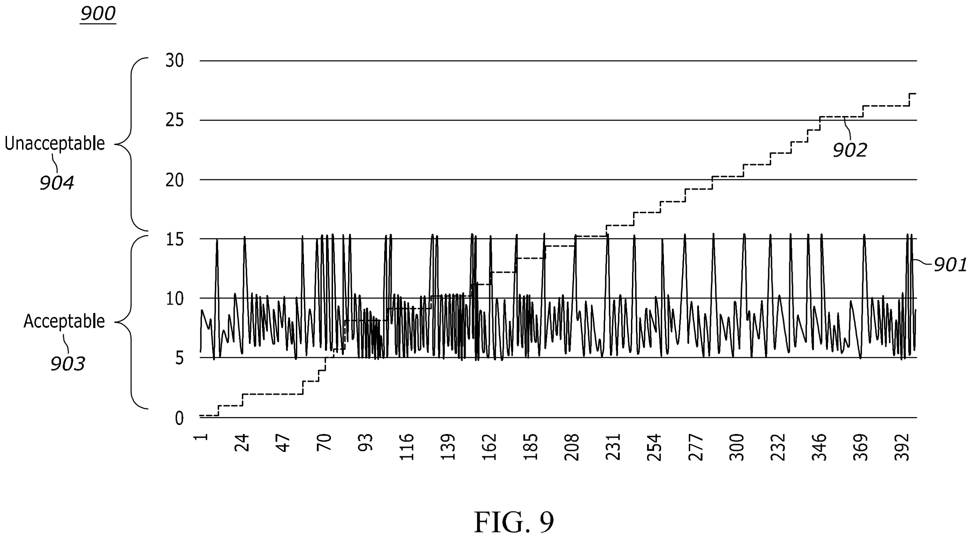

In the foregoing regards, FIG. 9 presents a graph 900 that illustrates how these teachings may serve to help identify sensors, actuators, or other circuits that are faulty. A first line 901 corresponds to single component and/or multiple component failure events while the second line 902 corresponds to accumulated intermittency data. A first portion 903 of the graph 900 indicates intermittency behavior that can be accepted while a second portion 904 of the graph 900 indicates intermittency behavior that is unacceptable and that can serve to trigger the notification, reporting, and/or control functionality described herein.

These teachings will permit condensing the amount of the duration of each state into an n-dimensional space and applying machine learning techniques for grouping datasets to provide for identifying and grouping multiple patterns of intermittency from one or more circuits (such as jet turbine engine sensors and/or FADEC components). It will be appreciated that these teachings will accommodate using non-supervised training. These teachings are also not necessarily dependent on the conditioning of the training information and, in particular, are not dependent upon a priori human knowledge.

It will also be appreciated that these teachings will accommodate the accumulation of intermittency data over multiple flights for a given aircraft. That accumulated data can then provide a longer timeframe against which to view current intermittent behavior.

Further aspects of the present disclosure are provided by the subject matter of the following clauses:
Clause 1. A method comprising: by a control circuit: accessing first time-dispersed sensor data from a first sensor; identifying a potential sensor fault for the first sensor as a function, at least in part, of sensor data intermittency.
Clause 2. The method of clause 1 wherein the first sensor comprises an aircraft-mounted sensor.
Clause 3. The method of clause 2 wherein the aircraft-mounted sensor comprises a jet turbine engine sensor.
Clause 4. The method of any of clause 1 through 3 wherein identifying a potential sensor fault for the first sensor as a function, at least in part, of sensor data intermittency comprises identifying a potential sensor fault for the first sensor as a function of only sensor data intermittency.
Clause 5. The method of any of clause 1 through 4 wherein identifying a potential sensor fault for the first sensor as a function, at least in part, of sensor data intermittency includes differentiating between a first range of intermittency and a second range of intermittency.
Clause 6. The method of any of clause 1 through 5 wherein identifying a potential sensor fault for the first sensor as a function, at least in part, of sensor data intermittency comprises identifying a potential sensor fault for the first sensor as a function, at least in part, of a rate of change of sensor data intermittency.
Clause 7. The method of any of clause 1 through 6 wherein identifying a potential sensor fault for the first sensor as a function, at least in part, of sensor data intermittency comprises: training a machine learning model using historical sensor data to provide a trained machine learning model; identifying and grouping sensor intermittency patterns using the trained machine learning model; identifying a potential sensor fault as a function of the sensor intermittency patterns.
Clause 8. The method of any of clause 1 through 7 wherein: accessing the first time-dispersed sensor data from the first sensor comprises accessing first time-dispersed sensor data from the first sensor and at least second time-dispersed sensor data from at least a second sensor; and identifying the potential sensor fault for the first sensor as a function, at least in part, of sensor data intermittency comprises identifying a potential sensor fault for the first sensor as a function, at least in part, of sensor data intermittency and identifying a potential sensor fault for the at least a second sensor as a function, at least in part, of sensor data intermittency.
Clause 9. A method comprising: by a control circuit: accessing first time-dispersed output from a first circuit; identifying a potential fault for the first circuit as a function, at least in part, of circuit output intermittency.
Clause 10. The method of clause 9 wherein the first circuit comprises a sensor.
Clause 11. The method of any of clause 9 through 10 wherein the first circuit comprises a non-sensor circuit.
Clause 12. The method of clause 9 through 11 wherein: accessing the first time-dispersed output from a first circuit comprises accessing first time-dispersed output from each of a plurality of non-sensor circuits; and identifying a potential fault for the first circuit comprises identifying a potential fault for each of at least some of the plurality of non-sensor circuits as a function, at least in part, of circuit output intermittency.
Clause 13. An apparatus comprising: a control circuit configured to: access first time-dispersed sensor data from a first sensor; identify a potential sensor fault for the first sensor as a function, at least in part, of sensor data intermittency.
Clause 14. The apparatus of clause 13 wherein the control circuit is configured to identify a potential sensor fault for the first sensor as a function, at least in part, of sensor data intermittency by identifying a potential sensor fault for the first sensor as a function, at least in part, of only sensor data intermittency.
Clause 15. The apparatus of any of clause 13 through 14 wherein the control circuit is configured to identify a potential sensor fault for the first sensor as a function, at least in part, of sensor data intermittency by differentiating between a first range of intermittency and a second range of intermittency.
Clause 16. The apparatus of any of clause 13 through 15 wherein the control circuit is configured to identify a potential sensor fault for the first sensor as a function, at least in part, of sensor data intermittency by identifying a potential sensor fault for the first sensor as a function, at least in part, of a rate of change of sensor data intermittency.
Clause 17. The apparatus of any of clause 13 through 16 wherein the control circuit is configured to identify a potential sensor fault for the first sensor as a function, at least in part, of sensor data intermittency by: accessing a machine learning model that was trained using historical sensor data; identifying and grouping sensor intermittency patterns using the machine learning model; and identifying a potential sensor fault as a function of the sensor intermittency patterns.
Clause 18. The apparatus of any of clause 13 through 17 wherein the control circuit is configured to further: access at least second time-dispersed sensor data from at least a second sensor; and identify a potential sensor fault for the at least a second sensor as a function, at least in part, of sensor data intermittency.
Clause 19. The apparatus of any of clause 13 through 18 wherein the control circuit comprises a part of a full authority digital engine control.
Clause 20. The apparatus of any of clause 13 through 19 wherein the first sensor comprises a jet turbine engine sensor.
Clause 21. An apparatus configured to carry out the method, in whole or in part, of any of clauses 1 through 12, including any combination and/or permutation thereof.

Those skilled in the art will recognize that a wide variety of modifications, alterations, and combinations can be made with respect to the above-described embodiments without departing from the scope of the present disclosure, and that such modifications, alterations, and combinations are to be viewed as being within the ambit of the present disclosure.

## Claims

1. A method comprising:
by a control circuit (105, 106):
accessing (201) first time-dispersed sensor data (202) a first sensor (103);
identifying (203) a potential sensor fault for the first sensor as a function, at least in part, of sensor data intermittency.

2. The method of claim 1 wherein the first sensor (103) comprises a jet turbine engine sensor.

3. The method of either of claim 1 or 2 wherein identifying (203) a potential sensor fault for the first sensor as a function, at least in part, of sensor data intermittency comprises identifying a potential sensor fault for the first sensor as a function of only sensor data intermittency.

4. The method of any of claims 1 through 3 wherein identifying (203) a potential sensor fault for the first sensor (103) as a function, at least in part, of sensor data intermittency includes differentiating between a first range of intermittency and a second range of intermittency.

5. The method of any of claims 1 through 4 wherein (203) identifying a potential sensor fault for the first sensor (103) as a function, at least in part, of sensor data intermittency comprises identifying a potential sensor fault for the first sensor (103) as a function, at least in part, of a rate of change of sensor data intermittency.

6. The method of any of claims 1 through 5 wherein identifying (203) a potential sensor fault for the first sensor (103) as a function, at least in part, of sensor data intermittency comprises:
training (301) a machine learning model using historical sensor data to provide a trained machine learning model;
identifying and grouping (302) sensor intermittency patterns using the trained machine learning model; and
identifying (303) a potential sensor fault as a function of the sensor intermittency patterns.

7. The method of any of claims 1 through 6 wherein:
accessing (201) the first time-dispersed sensor data (202) from the first sensor (103) comprises accessing first time-dispersed sensor data from the first sensor and at least second time-dispersed sensor data from at least a second sensor (104); and
identifying (203) the potential sensor fault for the first sensor (103) as a function, at least in part, of sensor data intermittency comprises identifying a potential sensor fault for the first sensor as a function, at least in part, of sensor data intermittency and identifying a potential sensor fault for the at least a second sensor (104) as a function, at least in part, of sensor data intermittency.

8. A method comprising:
by a control circuit (105, 106):
accessing (201) first time-dispersed output (202) from a first circuit (101);
identifying (203) a potential fault for the first circuit as a function, at least in part, of circuit output intermittency.

9. The method of claim 8 wherein:
accessing (201) the first time-dispersed output (202) from a first circuit (101) comprises accessing first time-dispersed output from each of a plurality of non-sensor circuits (101); and
identifying (203) a potential fault for the first circuit comprises identifying a potential fault for each of at least some of the plurality of non-sensor circuits (101) as a function, at least in part, of circuit output intermittency.

10. An apparatus comprising:
a control circuit (105, 106) configured to:
access (201) first time-dispersed sensor data (202) from a first sensor (103);
identify (203) a potential sensor fault for the first sensor (103) as a function, at least in part, of sensor data intermittency.

11. The apparatus of claim 10 wherein the control circuit (105, 106) is configured to identify (203) a potential sensor fault for the first sensor (103) as a function, at least in part, of sensor data intermittency by identifying (203) a potential sensor fault for the first sensor (103) as a function, at least in part, of only sensor data intermittency.

12. The apparatus of either of claims 10 and 11 wherein the control circuit (105, 106) is configured to identify (203) a potential sensor fault for the first sensor (103) as a function, at least in part, of sensor data intermittency by differentiating between a first range of intermittency and a second range of intermittency.

13. The apparatus of any of claims 10 through 12 wherein the control circuit (105, 106) is configured to identify (203) a potential sensor fault for the first sensor (103) as a function, at least in part, of sensor data intermittency by identifying (203) a potential sensor fault for the first sensor (103) as a function, at least in part, of a rate of change of sensor data intermittency.

14. The apparatus of any of claims 10 through 13 wherein the control circuit (105, 106) is configured to identify (203) a potential sensor fault for the first sensor (103) as a function, at least in part, of sensor data intermittency by:
accessing a machine learning model that was trained (301) using historical sensor data;
identifying and grouping (302) sensor intermittency patterns using the machine learning model; and
identifying (303) a potential sensor fault as a function of the sensor intermittency patterns.

15. The apparatus of any of claims 10 through 14 wherein the control circuit (105, 106) is configured to further:
access at least second time-dispersed sensor data from at least a second sensor; and
identify a potential sensor fault for the at least a second sensor as a function, at least in part, of sensor data intermittency.
